# EUROPEAN PATENT APPLICATION

(11) **EP 4 369 815 A1**
(43) Date of publication of application: **15.05.2024**
(21) Application number: 21948833.5
(22) Date of filing: 08.07.2021
(51) Int. Cl.: H04W 72/04

(54) **COMMUNICATION METHOD AND APPARATUS, USER EQUIPMENT, NETWORK DEVICE, AND STORAGE MEDIUM**

(71) Applicant: Beijing Xiaomi Mobile Software Co., Ltd., Beijing 100085 (CN)
(72) Inventor: CHI, Liangang, Beijing 100085 (CN)
(74) Representative: dompatent von Kreisler Selting Werner - Partnerschaft von Patent- und Rechtsanwälten mbB
(86) International application number: PCT/CN2021/105307
(87) International publication number: WO 2023/279337

(57) **Abstract**

The present disclosure relates to the technical field of communications, and provides a communication method and apparatus, a user equipment (UE), a network device, and a storage medium. The method comprises: a network device obtains subbands or BWPs in a carrier, determines the type of each subband or each BWP, determines configuration information according to the type, sends the configuration information to one or more UEs by means of a configuration signaling, and communicates with the one or more UEs in units of the subbands or the BWPs according to the configuration information. In this way, the communication method provided by the present disclosure can better adapt to the dynamic changes in the uplink and downlink services of the UE, thereby improving the utilization rate of the spectrum resource.

## Description

### FIELD

The present invention relates to the technical field of communication, and in particular, to a communication method and apparatus, a user equipment, a network device, and a storage medium.

### BACKGROUND

With the rapid popularization of smart devices and the increasing number of users, the existing radio frequency resources are limited. However, existing and future wireless systems still need to provide user equipment (UE) with a high data rate to meet access service requirements of the UE. Therefore, to meet the requirement of the high data transmission rate for the UE, a utilization of the existing radio frequency resource needs to be improved.

In the related art, since neither a frequency division duplex (FDD) mode nor a time division duplex (TDD) mode can configure radio frequency resource for the UE according to dynamic changes in uplink and downlink, it is difficult to further improve the utilization of the existing radio frequency resource.

### SUMMARY

In order to solve the technical problem that it is impossible to configure the radio frequency resource for the UE according to dynamic changes in uplink and downlink, a communication method and apparatus, a user equipment, a network device, and a storage medium are provided in the present invention.

According to an aspect of embodiments of the present invention, there is provided a communication method, performed by a network device, including: obtaining a subband or a bandwidth part (BWP) in a carrier; determining a type of each subband or each BWP; determining configuration information according to the type; sending the configuration information to at least one user equipment (UE) via configuration signaling; and communicating with the at least one UE in a unit of the subband or the BWP according to the configuration information.

According to another aspect of embodiments of the present invention, there is provided a communication method, performed by a UE, including: obtaining configuration signaling carrying configuration information sent by a network device, in which the configuration information is used to configure a type of a subband or a bandwidth part (BWP) in a carrier; receiving the configuration information sent by the network device via the configuration signaling; and communicating with the network device in a unit of at least one subband or BWP in the carrier according to the configuration information.

According to a further aspect of embodiments of the present invention, there is provided a communication apparatus, including: a transceiving module, configured to obtain a subband or a bandwidth part (BWP) in a carrier; and a processing module, configured to determine a type of each subband or each BWP, and configured to generate configuration information according to the type of the subband or the BWP. The transceiving module is further configured to send the configuration information to at least one user equipment (UE) via configuration signaling, and communicate with the at least one UE in a unit of the subband or the BWP according to the configuration information.

According to a further aspect of embodiments of the present invention, there is provided a communication apparatus, including: a transceiving module, configured to obtain configuration signaling carrying configuration information sent by a network device, in which the configuration information is used to configure a type of a subband or a bandwidth part (BWP) in a carrier; and a processing module, configured to receive the configuration information sent by the network device via the configuration signaling. The transceiving module is further configured to communicate with the network device in a unit of at least one subband or BWP in the carrier according to the configuration information.

According to a further aspect of embodiments of the present invention, there is provided a user equipment (UE), including: a transceiver; a memory; and a processor, connected to the transceiver and the memory, respectively, and configured to execute computer-executable instructions stored on the memory, to control the transceiver to transmit or receive a radio signal and to implement the method as described in the above aspect.

According to a further aspect of embodiments of the present invention, there is provided a network device, including: a transceiver; a memory; and a processor, connected to the transceiver and the memory, respectively, and configured to execute computer-executable instructions stored on the memory, to control the transceiver to transmit or receive a radio signal and to implement the method as described in the above aspect.

According to a further aspect of embodiments of the present invention, there is provided a computer-readable storage medium for storing computer-executable instructions that, after executed by a processor, implement the method as described in the above aspect.

According to a further aspect of embodiments of the present invention, there is provided a computer-readable storage medium for storing computer-executable instructions that, after executed by a processor, implement the method as described in the above aspect.

Based on the above, with the communication method, the communication apparatus, the user equipment, the network device can obtain the subband(s) or BWP(s) in the carrier, determine the type of each subband or BWP, determine the configuration information according to the type of each subband or BWP, send the configuration information to at least one UE via the configuration signaling, and communicate with the at least one UE in a unit of the subband or BWP according to the configuration information. Therefore, in the embodiments of the present invention, the network device can separately determine the types of subbands or BWPs for the plurality of UEs in the carrier according to the inter-UE interference measurement reporting information, and communicate with a UE according to the type of the subband or BWP corresponding to the UE. In this way, the present method can be adapted to dynamic changes of uplink and downlink services of the UE, and the utilization of the radio frequency resource is improved.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

The above and/or additional aspects and advantages of embodiments of the present invention will become apparent and more readily appreciated from the following descriptions made with reference to the drawings, in which:
FIG. 1 is a flow chart of a communication method according to an embodiment of the present invention;
FIG. 2 is a flow chart of a communication method according to another embodiment of the present invention;
FIG. 3 is a flow chart of a communication method according to a further embodiment of the present invention;
FIG. 4 is a flow chart of a communication method according to a further embodiment of the present invention;
FIG. 5 is a flow chart of a communication method according to a further embodiment of the present invention;
FIG. 6 is a schematic diagram of a communication apparatus according to an embodiment of the present invention;
FIG. 7 is a schematic diagram of a communication apparatus according to another embodiment of the present invention;
FIG. 8 is a block diagram of a user equipment according to an embodiment of the present invention; and
FIG. 9 is a block diagram of a network device according to an embodiment of the present invention.

### DETAILED DESCRIPTION

Reference will now be made in detail to the embodiments, examples of which are illustrated in the accompanying drawings. When the following description refers to the accompanying drawings, the same numerals in different drawings refer to the same or similar elements unless otherwise indicated. The implementations described in the following embodiments do not represent all implementations consistent with the embodiments of the present invention. Rather, they are merely examples of apparatuses and methods consistent with the aspects of the disclosed embodiments as recited in the appended claims.

Terms used in the embodiments of the present invention are only for the purpose of describing specific embodiments, and shall not be construed to limit the present invention. As used in the embodiments of the present invention and the appended claims, "a/an" and "the" in a singular form are intended to include plural forms, unless clearly indicated in the context otherwise. It should be understood that, the term "and/or" used herein represents and contains any one of associated listed items and all possible combinations of more than one associated listed items.

It should be understood that terms such as "first," "second" and "third" may be used in the embodiments of the present invention for describing various information, these information should not be limited by these terms. These terms are only used for distinguishing information of the same type from others. For example, first information may also be referred to as second information, and similarly, the second information may also be referred to as the first information, without departing from the scope of the embodiments of the present invention. As used herein, the term "if' may be construed to mean "when" or "upon" or "in response to determining" depending on the context.

Embodiments of the present invention are described in detail below, examples of which are illustrated in the accompanying drawings, where like or similar reference numerals designate like or similar elements throughout. The embodiments described below by referring to the figures are explanatory and are intended to explain the present invention, and should not be construed as limiting the present invention.

Based on the above, with the communication method, the communication apparatus, the user equipment, the network device can obtain the subband(s) or BWP(s) in the carrier, determine the type of each subband or BWP, determine the configuration information according to the type of each subband or BWP, send the configuration information to at least one UE via the configuration signaling, and communicate with the at least one UE in a unit of the subband or BWP according to the configuration information. Therefore, in the embodiments of the present invention, the network device can separately determine the types of subbands or BWPs for the plurality of UEs in the carrier according to the inter-UE interference measurement reporting information, and communicate with a UE according to the type of the subband or BWP corresponding to the UE. In this way, the present method can be adapted to dynamic changes of uplink and downlink services of the UE, and the utilization of the radio frequency resource is improved.

The communication method, the communication apparatus, the user equipment, the network device, and the storage medium provided by the present invention will be described in detail below with reference to the accompanying drawings.

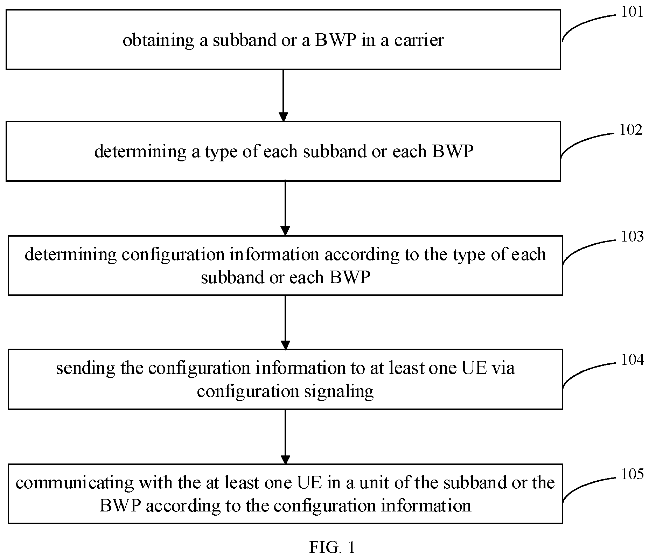

FIG. 1 is a flow chart of a communication method according to an embodiment of the present invention, applied to the network device. As shown in FIG. 1, the communication method includes the following steps.

In block 101, a subband or a bandwidth part (BWP) in a carrier is obtained.

It should be noted that, in an embodiment of the present invention, the network device may be a base station.

In an embodiment of the present invention, the network device may obtain subband(s) or BWP(s) in the carrier. The subband is a continuous frequency segment, and one subband or BWP may include at least one physical resource block (PRB). The PRB is a unit of the frequency domain, which is composed of consecutive subcarriers.

In an embodiment of the present invention, the subband or the BWP in the carrier may be a common subband or BWP.

In block 102, a type of each subband or each BWP is determined.

In an embodiment of the present invention, the network device may determine the type of each subband or each BWP according to inter-UE interference measurement reporting information.

Further, in an embodiment of the present invention, the type of the subband or the BWP may be any one of an uplink type, a downlink type, or a flexible type. In an embodiment of the present invention, in responding to determining that the type of the subband or the BWP is the uplink type, the network device may receive data sent by the UE on the subband or the BWP. In another embodiment of the present invention, in responding to determining that the type of the subband or the BWP is the downlink type, the network device may send data to the UE on the subband or the BWP. In still another embodiment of the present invention, in responding to determining that the type of the subband or BWP is the flexible type, the network device may configure the subband or the BWP to be uplink transmission, downlink transmission, or null according to actual needs. In an embodiment of the present invention, in responding to determining that the flexible subband or BWP is configured as the null, the network device does not perform any operation on the subband or the BWP.

In block 103, configuration information is determined according to the type of the subband or the BWP.

In an embodiment of the present invention, the configuration information may include an identifier of each subband or BWP applied to the UE, and the UE can determine the corresponding subband or the BWP in the configuration information according to the identifier.

In block 104, the configuration information is sent to at least one UE via configuration signaling.

It should be noted that the method indicated in the embodiments of the present invention may be applied to any UE. The UE may be a device that provides voice and/or data connectivity to a user. The UE can communicate with one or more core networks via a radio access network (RAN). The UE may be an Internet of Things (IoT) terminal, such as a sensor device, a mobile phone (also called as a "cellular" phone) and or a computer having the IoT terminal The computer of the terminal, for example, may be a fixed device, a portable device, a pocket device, a hand-held device, a computer built-in device or a vehicle-mounted device. For example, it may be a station (STA), a subscriber unit, a subscriber station, a mobile station, a mobile, a remote station, an access point, a remote terminal, an access terminal, a user terminal, a user agent. Alternatively, the UE may be a device of an unmanned aerial vehicle. Alternatively, the UE may be a vehicle-mounted device, for example, a trip computer with a wireless communication function, or a wireless communication device connected externally to the trip computer. Alternatively, the UE may be a roadside device, for example, it may be a street lamp, a signal lamp, or other roadside devices with a wireless communication function.

In an embodiment of the present invention, the configuration signaling may include configuration information, and the configuration information is used to configure the type of each subband or BWP in the carrier.

Moreover, in an embodiment of the present invention, the network device may send configuration signaling to a single UE in the cell covered by the network device. In another embodiment of the present invention, the network device may send configuration signaling to a group of UEs in a cell covered by the network device. In yet another embodiment of the present invention, the network device may send configuration signaling to all UEs in the cell covered by the network device.

Further, in an embodiment of the present invention, when the network device sends configuration signaling to different UEs in the cell covered by the network device, the network device may send different configuration signaling to different UEs.

Specifically, in an embodiment of the present invention, when the network device sends configuration signaling to a single UE in the cell covered by the network device, the network device may send the configuration signaling to a single UE by using radio resource control (RRC) dedicated signaling.

In another embodiment of the present invention, when the network device sends configuration information to a group of UEs in the cell covered by the network device, the network device may send the configuration signaling to the group of UEs by using downlink control information (DCI) signaling.

In another embodiment of the present invention, when the network device sends configuration signaling to all UEs in the cell covered by the network device, the network device may send common subband or BWP configuration signaling to all UEs by using RRC common signaling.

In block 105, communicating with the at least one UE is performed in a unit of the subband or the BWP according to the configuration information.

In an embodiment of the present invention, when types of subbands or BWPs in the configuration information are different, the way the network device uses the subband or the BWP to communicate with the UE is also different.

Specifically, in an embodiment of the present invention, when the type of the subband or BWP in the configuration information is the downlink type, the network device directly sends data to the UE on the subband or BWP.

In another embodiment of the present invention, when the type of the subband or BWP in the configuration information is the uplink type, the network device directly receives data sent by the UE on the subband or BWP.

In another embodiment of the present invention, when the type of the subband or BWP in the configuration information is the flexible type, the network device may perform uplink transmission, downlink transmission or nothing on the subband or BWP. In an embodiment of the present invention, the network device may use the configuration information to configure the subband or BWP of the flexible type for the uplink transmission, the downlink transmission, or the null. Therefore, when the UE determines that the type of the subband or BWP corresponding to the UE itself is the flexible type, it can further determine if the subband or BWP is used for the uplink transmission, the downlink transmission, or the null according to the configuration information.

In an embodiment of the present invention, when the subband or BWP is set as null, the network device will not perform any operation on the subband or BWP.

Based on the above, in the communication method provided by the embodiments of the present invention, the network device can obtain the subband(s) or BWP(s) in the carrier, determine the type of each subband or BWP, determine the configuration information according to the type of each subband or BWP, send the configuration information to at least one UE via the configuration signaling, and communicate with the at least one UE in a unit of the subband or BWP according to the configuration information. Therefore, in the embodiments of the present invention, the network device can separately determine the types of subbands or BWPs for the plurality of UEs in the carrier according to the inter-UE interference measurement reporting information, and communicate with a UE according to the type of the subband or BWP corresponding to the UE. In this way, the present method can be adapted to dynamic changes of uplink and downlink services of the UE, and the utilization of the radio frequency resource is improved.

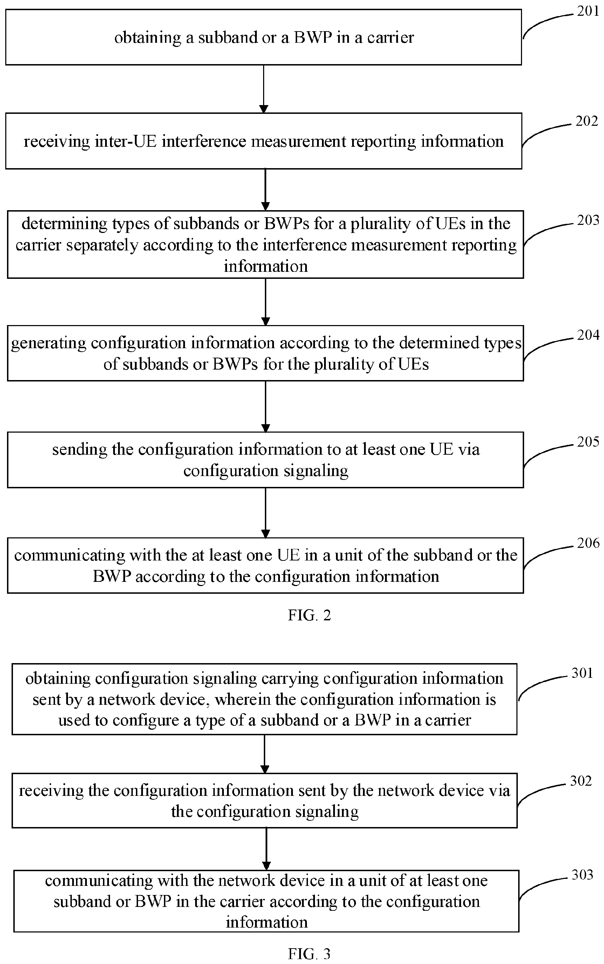

FIG. 2 is a flow chart of a communication method according to another embodiment of the present invention, applied to the network device. As shown in FIG. 2, the communication method includes the following steps.

In block 201, a subband or BWP in a carrier is obtained.

For a detailed introduction about obtaining the subband or BWP in the carrier, reference may be made to relevant introductions in the foregoing embodiments, which will not be elaborated here.

In block 202, inter-UE interference measurement reporting information is received.

In an embodiment of the present invention, the interference measurement reporting information may include at least one of reference signal receiving power (RSRP), received signal strength indication (RSSI), a distance between UEs.

Further, in an embodiment of the present invention, the network device may periodically obtain the inter-UE interference measurement reporting information.

In block 203, types of subbands or BWPs for a plurality of UEs in the carrier are determined separately according to the interference measurement reporting information.

In an embodiment of the present invention, the type of the subband or BWP may be any one of the uplink type, the downlink type, and the flexible type.

In an embodiment of the present invention, due to different contents included in the interference measurement reporting information, methods for the network device to determine the types of subbands or BWPs for the plurality of UEs in the carrier according to the interference measurement reporting information are different.

As an example, in one embodiment of the present invention, a method for the network device to determine the types of subbands or BWPs for the plurality of UEs in the carrier according to the interference measurement reporting information may include: in response to determining that an RSRP/RSSI between two UEs is relatively large or the distance between the two UEs is relatively short, allocating the same uplink and downlink slot configuration to the two UEs, or configuring a flexible type of subband or BWP between the subbands or BWPs of the two UEs.

In another embodiment of the present invention, a method for the network device to determine the types of subbands or BWP for the plurality of UEs in the carrier according to the interference measurement reporting information may include: in response to determining that an RSRP/RSSI between two UEs is relatively small or the distance between the two UEs is relatively long, allocating different uplink and downlink slot configurations to the two UEs, or not configuring a flexible type of subband or BWP between the subbands or BWPs of the two UEs.

In an embodiment of the present invention, the network device may further configure the type of the common subband or BWP in the carrier according to the interference measurement reporting information.

In block 204, configuration information is generated according to the determined types of subbands or BWPs for the plurality of UEs.

In block 205, the configuration information is sent to at least one UE via configuration signaling.

In block 206, communicating with the at least one UE is performed in a unit of the subband or the BWP according to the configuration information.

For the detailed introduction of steps 204 to 206, reference may be made to the related introduction in the foregoing embodiments, which will not be elaborated here.

Based on the above, in the communication method provided by the embodiments of the present invention, the network device can obtain the subband(s) or BWP(s) in the carrier, determine the type of each subband or BWP, determine the configuration information according to the type of subband or BWP, send the configuration information to at least one UE via the configuration signaling, and communicate with the at least one UE in a unit of the subband or BWP according to the configuration information. Therefore, in the embodiments of the present invention, the network device can separately determine the types of subbands or BWPs for the plurality of UEs in the carrier according to the inter-UE interference measurement reporting information, and communicate with a UE according to the type of the subband or BWP corresponding to the UE. In this way, the present method can be adapted to dynamic changes of uplink and downlink services of the UE, and the utilization of the radio frequency resource is improved.

FIG. 3 is a flow chart of a communication method according to a further embodiment of the present invention, applied to the UE. As shown in FIG. 3, the communication method includes the following steps.

In block 301, configuration signaling carrying configuration information sent by a network device is obtained, the configuration information is used to configure a type of a subband or a BWP in a carrier.

It should be noted that, in an embodiment of the present invention, when different UEs in the cell covered by the network device obtain the configuration signaling sent by the network device, the ways of obtaining the configuration signaling sent by the network device are different.

Specifically, in an embodiment of the present invention, when a single UE in a cell covered by the network device obtains the configuration signaling sent by the network device, the single UE may obtain the configuration signaling sent by the network device by using RRC dedicated signaling.

In another embodiment of the present invention, when a group of UEs in the cell covered by the network device obtains the configuration signaling sent by the network device, the group of UEs can obtain the configuration signaling sent by the network device by using DCI signaling.

In another embodiment of the present invention, when all UEs in the cell covered by the network device obtain the configuration signaling sent by the network device, all UEs can obtain a common subband or BWP configuration information sent from the network device by using RRC common signaling.

In block 302, the configuration information sent from the network device is received via the configuration signaling.

In an embodiment of the present invention, the configuration information may include an identifier of each subband or BWP applied to the UE, and the UE can determine the corresponding subband or the BWP in the configuration information according to the identifier.

In block 303, communicating with the network device is performed in a unit of at least one subband or BWP in the carrier according to the configuration information.

In an embodiment of the present invention, the UE receives the configuration information sent from the network device. Then, the UE may determine the subband or BWP corresponding to itself according to the identifier in the configuration information, determine the type of the subband or BWP, and communicate with the network device by using the at least one subband or BWP as a unit.

In an embodiment of the present invention, the type of the subband or the BWP includes an uplink type, a downlink type and a flexible type.

Further, in an embodiment of the present invention, based on different types of the subband or BWP, the communication between the UE and the network device is performed in different manners.

Specifically, in an embodiment of the present invention, in responding to determining that the type is the downlink type, the UE receives data sent from the network device on the subband or the BWP.

In another embodiment of the present invention, in responding to determining that the type is the uplink type, the UE sends data to the network device on the subband or the BWP.

In another embodiment of the present invention, in responding to determining that the type is the flexible type, the UE determines the subband or the BWP to be configured for one of uplink transmission, downlink transmission, or null according to the configuration information. In an embodiment of the present invention, in responding to determining that the subband or the BWP is configured as the null, the network device does not send or receive data on the subband or the BWP.

Based on the above, in the communication method provided by the embodiments of the present invention, the UE can obtain the configuration signaling carrying the configuration information sent by the network device, the configuration information is used to configure the type of the subband or the in the carrier, receive the configuration information sent by the network device via the configuration signaling, and communicate with the network device in a unit of at least one subband or BWP in the carrier according to the configuration information. Therefore, in the embodiments of the present invention, the network device can separately determine the types of subbands or BWPs for the plurality of UEs in the carrier according to the inter-UE interference measurement reporting information, and communicate with a UE according to the type of the subband or BWP corresponding to the UE. In this way, the present method can be adapted to dynamic changes of uplink and downlink services of the UE, and the utilization of the radio frequency resource is improved.

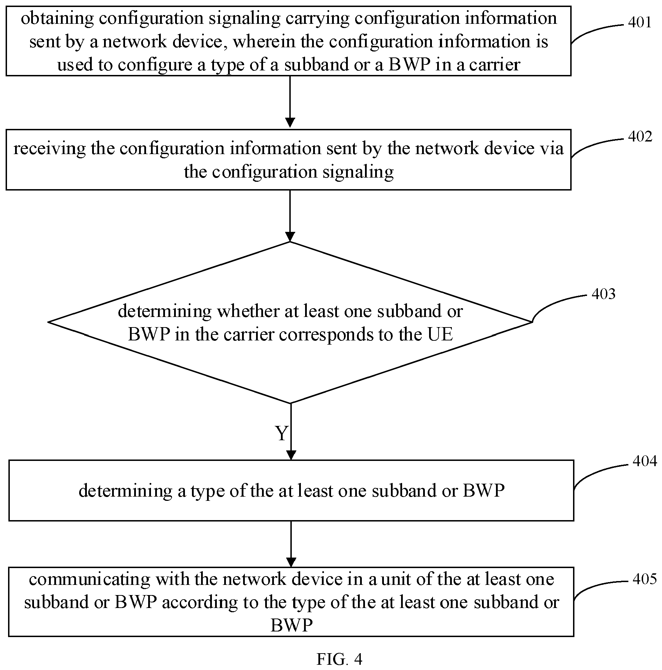

FIG. 4 is a flow chart of a communication method according to a further embodiment of the present invention, applied to the UE. As shown in FIG. 4, the communication method includes the following steps.

In block 401, configuration signaling carrying configuration information sent by a network device is obtained, the configuration information is used to configure a type of a subband or a BWP in a carrier.

In block 402, the configuration information sent from the network device is received via the configuration signaling.

For the detailed introduction of steps 401 to 402, reference may be made to relevant introductions in the foregoing embodiments, which will not be elaborated here.

In block 403, it is determined whether at least one subband or BWP in the carrier corresponds to the UE.

In an embodiment of the present invention, the configuration information may further include an identifier of each subband or BWP applied to the UE, and the UE may determine whether the subband or BWP in the configuration information corresponds to itself according to its own identifier.

Further, when the at least one subband or BWP in the carrier corresponds to the UE, the UE may communicate with the network device based on the subband or BWP, and perform an operation in block 404.

In block 404, a type of the at least one subband or BWP is determined.

In an embodiment of the present invention, the type of subband or BWP may be any one of an uplink type, a downlink type and a flexible type. Further, in an embodiment of the present invention, in responding to determining that the type of subband or BWP is the flexible type, the UE may further determine the subband or the BWP to be for one of uplink transmission, downlink transmission, or null according to the received configuration information.

In block 405, communicating with the network device is performed in a unit of the at least one subband or BWP according to the type of the at least one subband or BWP.

For the detailed introduction of step 405, reference may be made to relevant introductions in the foregoing embodiments, which will not be elaborated here.

Based on the above, in the communication method provided by the embodiments of the present invention, the UE can obtain the configuration signaling carrying the configuration information sent by the network device, the configuration information is used to configure the type of the subband or the in the carrier, receive the configuration information sent by the network device via the configuration signaling, and communicate with the network device in a unit of at least one subband or BWP in the carrier according to the configuration information. Therefore, in the embodiments of the present invention, the network device can separately determine the types of subbands or BWPs for the plurality of UEs in the carrier according to the inter-UE interference measurement reporting information, and communicate with a UE according to the type of the subband or BWP corresponding to the UE. In this way, the present method can be adapted to dynamic changes of uplink and downlink services of the UE, and the utilization of the radio frequency resource is improved.

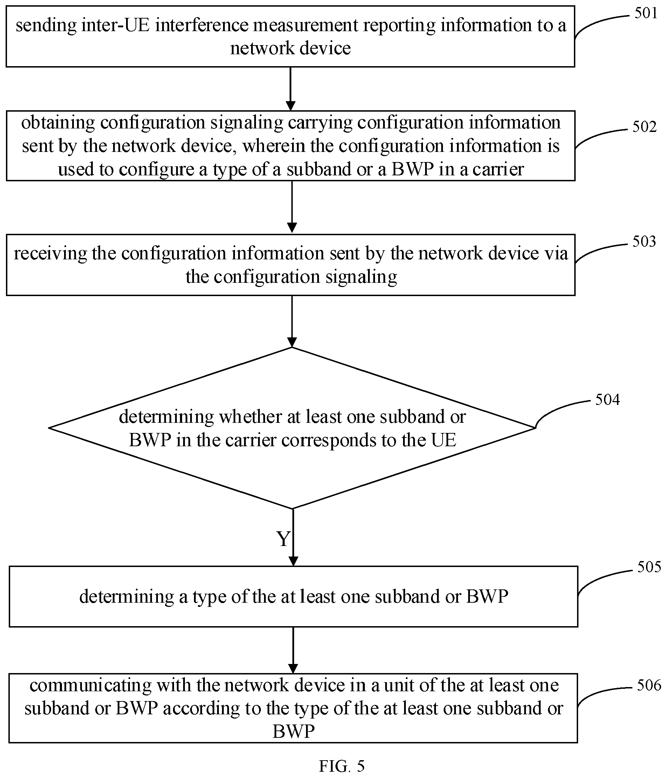

FIG. 5 is a flow chart of a communication method according to a further embodiment of the present invention, applied to the UE. As shown in FIG. 5, the communication method includes the following steps.

In block 501, inter-UE interference measurement reporting information is sent to the network device.

In an embodiment of the present invention, the interference measurement reporting information may include at least one of RSRP, RSSI, or a distance between UEs.

Further, in an embodiment of the present invention, the UE may periodically send the inter-UE interference measurement reporting information to the network device.

In block 502, configuration signaling carrying configuration information sent by the network device is obtained, the configuration information is used to configure a type of a subband or a BWP in a carrier.

In block 503, the configuration information sent from the network device is received via the configuration signaling.

In block 504, it is determined whether at least one subband or BWP in the carrier corresponds to the UE.

In an embodiment of the present invention, the configuration information may further include an identifier of each subband or BWP applied to the UE, and the UE may determine whether the subband or BWP in the configuration information corresponds to itself according to its own identifier.

Further, when the at least one subband or BWP in the carrier corresponds to the UE, the UE may communicate with the network device based on the subband or BWP, and perform an operation in block 505.

In block 505, a type of the at least one subband or BWP is determined.

In block 506, communicating with the network device is performed in a unit of the at least one subband or BWP according to the type of the at least one subband or BWP.

For the detailed introduction of steps 502 to 506, reference may be made to relevant introductions in the foregoing embodiments, which will not be elaborated here.

Based on the above, in the communication method provided by the embodiments of the present invention, the UE can obtain the configuration signaling carrying the configuration information sent by the network device, the configuration information is used to configure the type of the subband or the in the carrier, receive the configuration information sent by the network device via the configuration signaling, and communicate with the network device in a unit of at least one subband or BWP in the carrier according to the configuration information. Therefore, in the embodiments of the present invention, the network device can separately determine the types of subbands or BWPs for the plurality of UEs in the carrier according to the inter-UE interference measurement reporting information, and communicate with a UE according to the type of the subband or BWP corresponding to the UE. In this way, the present method can be adapted to dynamic changes of uplink and downlink services of the UE, and the utilization of the radio frequency resource is improved.

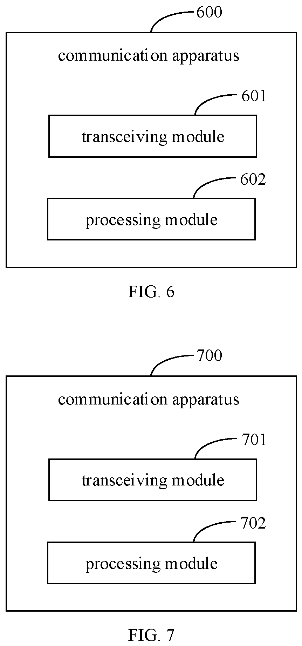

FIG. 6 is a schematic diagram of a communication apparatus according to an embodiment of the present invention. As shown in FIG. 6, the apparatus 600 includes: a transceiving module 601 and a processing module 602.

The transceiving module 601 is configured to obtain a subband or a BWP in a carrier. The processing module 602 is configured to determine a type of each subband or each BWP, and configured to generate configuration information according to the type of the subband or the BWP. The transceiving module 601 is further configured to send the configuration information to at least one UE via configuration signaling, and communicate with the at least one UE in a unit of the subband or the BWP according to the configuration information.

Based on the above, in the communication method provided by the embodiments of the present invention, the network device can obtain the subband(s) or BWP(s) in the carrier, determine the type of each subband or BWP, determine the configuration information according to the type of each subband or BWP, send the configuration information to at least one UE via the configuration signaling, and communicate with the at least one UE in a unit of the subband or BWP according to the configuration information. Therefore, in the embodiments of the present invention, the network device can separately determine the types of subbands or BWPs for the plurality of UEs in the carrier according to the inter-UE interference measurement reporting information, and communicate with a UE according to the type of the subband or BWP corresponding to the UE. In this way, the present method can be adapted to dynamic changes of uplink and downlink services of the UE, and the utilization of the radio frequency resource is improved.

In an embodiment of the present invention, the type of subband or BWP includes an uplink type, a downlink type and a flexible type.

In another embodiment of the present invention, the apparatus is further configured to: send data to the UE on the subband or the BWP in responding to determining that the type is the downlink type; to receive data sent by the UE on the subband or the BWP in responding to determining that the type is the uplink type; or configure the subband or the BWP to be for one of uplink transmission, downlink transmission, or null according to the configuration information in responding to determining that the type is the flexible type.

In a further embodiment of the present invention, the processing module 602 is further configured to: receive inter-UE interference measurement reporting information; and determine types of subbands or BWPs for a plurality of UEs in the carrier separately according to the interference measurement reporting information.

In a further embodiment of the present invention, the configuration signaling includes the configuration information, and the configuration information is used to configure the type of the subband or the BWP in the carrier.

In a further embodiment of the present invention, the configuration signaling is RRC common signaling, RRC dedicated signaling or DCI signaling.

FIG. 7 is a schematic diagram of a communication apparatus according to another embodiment of the present invention. As shown in FIG. 7, the apparatus 700 includes: a transceiving module 701 and a processing module 702.

The transceiving module 701 is configured to obtain configuration signaling carrying configuration information sent by a network device, in which the configuration information is used to configure a type of a subband or a BWP in a carrier. The processing module 702 is configured to receive the configuration information sent by the network device via the configuration signaling. The transceiving module 701 is further configured to communicate with the network device in a unit of at least one subband or BWP in the carrier according to the configuration information.

Based on the above, in the communication apparatus provided by the embodiments of the present invention, the UE can obtain the configuration signaling carrying the configuration information sent by the network device, the configuration information is used to configure the type of the subband or the in the carrier, receive the configuration information sent by the network device via the configuration signaling, and communicate with the network device in a unit of at least one subband or BWP in the carrier according to the configuration information. Therefore, in the embodiments of the present invention, the network device can separately determine the types of subbands or BWPs for the plurality of UEs in the carrier according to the inter-UE interference measurement reporting information, and communicate with a UE according to the type of the subband or BWP corresponding to the UE. In this way, the present method can be adapted to dynamic changes of uplink and downlink services of the UE, and the utilization of the radio frequency resource is improved.

In an embodiment of the present invention, the transceiving module 701 is further configured to: determine whether at least one subband or BWP in the carrier corresponds to the UE; determine a type of the at least one subband or BWP in response to determining that the at least one subband or BWP in the carrier corresponds to the UE; and communicate with the network device in a unit of the at least one subband or BWP according to the type of the at least one subband or BWP.

In another embodiment of the present invention, the type of subband or BWP includes an uplink type, a downlink type and a flexible type.

In a further embodiment of the present invention, the apparatus is further configured to receive data sent from the network device on the subband or the BWP in responding to determining that the type is the downlink type; send data to the network device on the subband or the BWP in responding to determining that the type is the uplink type; or determine the subband or the BWP to be configured for one of uplink transmission, downlink transmission, or null according to the configuration information in responding to determining that the type is the flexible type.

In a further embodiment of the present invention, the apparatus is further configured to send inter-UE interference measurement reporting information to the network device.

In a further embodiment of the present invention, the configuration signaling includes the configuration information, and the configuration information is used to configure the type of the subband or the BWP in the carrier.

In a further embodiment of the present invention, the configuration signaling is RRC common signaling, RRC dedicated signaling or DCI signaling.

A computer storage medium storing an executable program is provided in the embodiments of the present invention. After the executable program is executed by a processor, the method shown in any one of FIG. 1 to FIG. 2, or FIG. 3 to FIG. 5 is implemented.

In order to implement the above embodiments, the present invention further provides a computer program product, including a computer program that, when executed by a processor, causes the method shown in any one of any one of FIG. 1 to FIG. 2, or FIG. 3 to FIG. 5 to be implemented.

In addition, in order to realize the above-mentioned embodiments, the present invention further provides a computer program that, when executed by a processor, causes the method shown in any one of any one of FIG. 1 to FIG. 2, or FIG. 3 to FIG. 5 to be implemented.

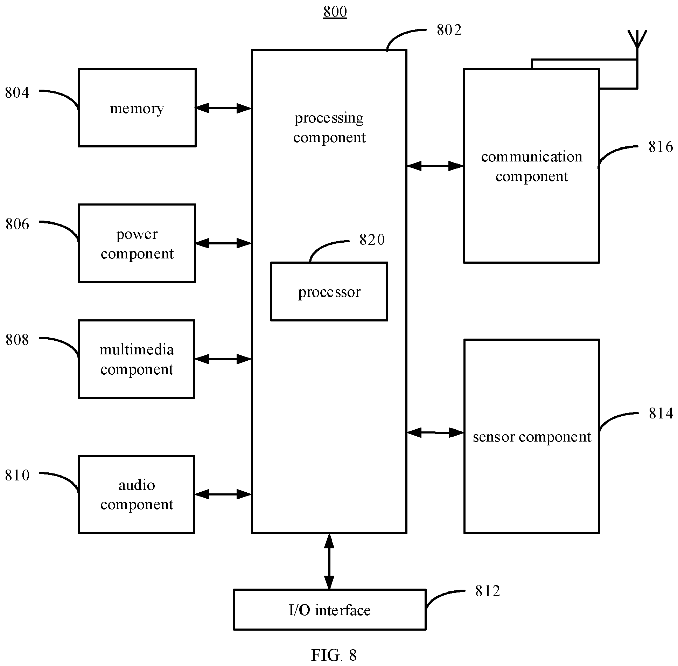

FIG. 8 is a block diagram of a UE 800 according to an embodiment of the present invention. For example, the UE 800 can be a mobile phone, a computer, a digital broadcast terminal, a messaging device, a game console, a tablet device, a medical device, a fitness device, a personal digital assistant, or the like.

Referring to FIG. 8, the UE 800 may include at least one of the following components: a processing component 802, a memory 804, a power component 806, a multimedia component 808, an audio component 1210, an input/output (I/O) interface 812, a sensor component 813, and a communication component 816.

The processing component 802 typically controls overall operations of the UE 800, such as the operations associated with display, telephone calls, data communications, camera operations, and recording operations. The processing component 802 may include at least one processor 820 to execute instructions to perform all or part of the steps in the above described methods. Moreover, the processing component 802 may include at least one module which facilitates the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, at least one power source, and any other components associated with generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button and the like. The button may include, but not limited to, a home button, a volume button, a starting button, and a locking button.

The sensor component 813 includes at least one sensor to provide status assessments of various aspects of the UE 800. For instance, the sensor component 813 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 813 may include a proximity sensor configured to detect the presence of nearby objects without any physical contact. The sensor component 813 may also include a light sensor, such as a CMOS or CCD image sensor, for use in imaging applications. In some embodiments, the sensor component 813 may further include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as Wi-Fi, 2G, or 3G, or a combination thereof. In one embodiment, the communication component 816 receives a broadcast signal or broadcast associated information from an external broadcast management system via a broadcast channel. In one embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In embodiments, the UE 800 may be implemented with at least one of an application specific integrated circuit (ASIC), a digital signal processor (DSP), a digital signal processing device (DSPD), a programmable logic device (PLD), a field programmable gate array (FPGA), a controller, a micro-controller, a microprocessor, or other electronic components, for performing the above described methods.

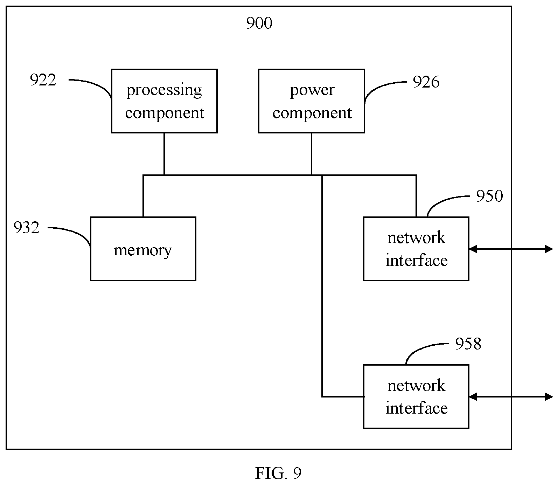

FIG. 9 is a block diagram of a network device according to an embodiment of the present invention. For example, the network device 900 may be a server. Referring to FIG. 9, the network device 900 includes a processing component 911 and a memory resource represented by a memory 932. The processing component 922 may further include at least one processor. The memory resource is configured to store instructions executable by the processing component 922, such as an application program. The application program stored in the memory 932 may include at least one module corresponding to a set of instructions. In addition, the processing component 915 is configured to execute the instructions to perform any method (e.g. the method as shown in FIG. 1) applied to the network device as described above.

The network device 900 further includes a power component 926 configured to operate a power management of the network device 900, a wired or wireless network interface 950 configured to connect the network device 900 to the network, and an input/output (I/O) interface 958. The network device 900 may operate an operating system stored in the memory 932, such as Windows Server TM, Mac OS XTM, Unix TM, Linux TM, Free BSDTM, or the like.

Other embodiments of the present invention will be apparent to those skilled in the art from consideration of the specification and practice of the present invention. The present invention is intended to cover any variations, uses, or adaptations of the present invention following the general principles thereof and including common knowledge or conventional technical means known in the art but not disclosed in the present invention. The specification and examples should be considered as explanatory only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. The scope of the present invention is only limited by the appended claims.

## Claims

1. A communication method, performed by a network device, comprising:
obtaining a subband or a bandwidth part, BWP, in a carrier;
determining a type of each subband or each BWP;
determining configuration information according to the type;
sending the configuration information to at least one user equipment, UE, via configuration signaling; and
communicating with the at least one UE in a unit of the subband or the BWP according to the configuration information.

2. The method according to claim 1, wherein the type comprises an uplink type, a downlink type and a flexible type, wherein
the network device sends data to the UE on the subband or the BWP in responding to determining that the type is the downlink type;
the network device receives data sent by the UE on the subband or the BWP in responding to determining that the type is the uplink type; or
the network device configures the subband or the BWP to be for one of uplink transmission, downlink transmission, or null according to the configuration information in responding to determining that the type is the flexible type.

3. The method according to claim 1 or claim 2, wherein determining the type of each subband or each BWP comprises:
receiving inter-UE interference measurement reporting information; and
determining types of subbands or BWPs for a plurality of UEs in the carrier separately according to the interference measurement reporting information.

4. The method according to claim 1, wherein the configuration signaling comprises the configuration information, and the configuration information is used to configure the type of the subband or the BWP in the carrier.

5. The method according to claim 4, wherein the configuration signaling is radio resource control, RRC, common signaling, RRC dedicated signaling or downlink control information, DCI, signaling.

6. A communication method, performed by a UE, comprising:
obtaining configuration signaling carrying configuration information sent by a network device, wherein the configuration information is used to configure a type of a subband or a BWP in a carrier;
receiving the configuration information sent by the network device via the configuration signaling; and
communicating with the network device in a unit of at least one subband or BWP in the carrier according to the configuration information.

7. The method according to claim 6, wherein communicating with the network device in a unit of the at least one subband or BWP in the carrier according to the configuration information comprises:
determining whether the at least one subband or BWP in the carrier corresponds to the UE;
determining a type of the at least one subband or BWP in response to determining that the at least one subband or BWP in the carrier corresponds to the UE; and
communicating with the network device in the unit of the at least one subband or BWP according to the type of the at least one subband or BWP.

8. The method according to claim 7, wherein the type comprises an uplink type, a downlink type and a flexible type, wherein
data sent by the network device is received on the subband or the BWP in responding to determining that the type is the downlink type;
data is sent to the network device on the subband or the BWP in responding to determining that the type is the uplink type; or
a configuration of the subband or the BWP is determined for one of uplink transmission, downlink transmission, or null according to the configuration information in responding to determining that the type is the flexible type.

9. The method according to claim 6, further comprising:
sending inter-UE interference measurement reporting information to the network device.

10. The method according to claim 6, wherein the configuration signaling comprises the configuration information, and the configuration information is used to configure the type of the subband or the BWP in the carrier.

11. The method according to claim 6, wherein the configuration signaling is RRC common signaling, RRC dedicated signaling or DCI signaling.

12. A communication apparatus, comprising:
a transceiving module, configured to obtain a subband or a BWP in a carrier; and
a processing module, configured to determine a type of each subband or each BWP, and configured to generate configuration information according to the type of the subband or the BWP;
wherein the transceiving module is further configured to send the configuration information to at least one UE via configuration signaling, and communicate with the at least one UE in a unit of the subband or the BWP according to the configuration information.

13. A communication apparatus, comprising:
a transceiving module, configured to obtain configuration signaling carrying configuration information sent by a network device, wherein the configuration information is used to configure a type of a subband or a BWP in a carrier; and
a processing module, configured to receive the configuration information sent by the network device via the configuration signaling;
wherein the transceiving module is further configured to communicate with the network device in a unit of at least one subband or BWP in the carrier according to the configuration information.

14. A UE, comprising:
a transceiver;
a memory; and
a processor, connected to the transceiver and the memory, respectively, and configured to execute computer-executable instructions stored on the memory, to control the transceiver to transmit or receive a radio signal and to implement the method according to any one of claims 6 to 11.

15. A network device, comprising:
a transceiver;
a memory; and
a processor, connected to the transceiver and the memory, respectively, and configured to execute computer-executable instructions stored on the memory, to control the transceiver to transmit or receive a radio signal and to implement the method according to any one of claims 1 to 5.

16. A computer-readable storage medium for storing computer-executable instructions that, after executed by a processor, implement the method according to any one of claims 1 to 5.

17. A computer-readable storage medium for storing computer-executable instructions that, after executed by a processor, implement the method according to any one of claims 6 to 11.
